# EUROPÄISCHE PATENTSCHRIFT

(11) **EP 2 274 154 B1**
(45) Veröffentlichungstag und Bekanntmachung des Hinweises auf die Patenterteilung: **29.01.2014**
(21) Anmeldenummer: 09734693.6
(22) Anmeldetag: 12.03.2009
(51) Int. Cl.: B29C 70/38

(54) **TAPELEGEVORRICHTUNG SOWIE VERFAHREN ZUM AUFBAU EINES LAMINATS**
TAPE INSTALLATION DEVICE AND METHOD FOR THE CONSTRUCTION OF A LAMINATE
DISPOSITIF DE POSE DE BANDE ET PROCÉDÉ D'ÉLABORATION D'UN STRATIFIÉ

(30) Priorität: 24.04.2008 DE 102008020564; 24.04.2008 US 125292 P
(43) Veröffentlichungstag der Anmeldung: 19.01.2011
(73) Patentinhaber: Airbus Operations GmbH, 21129 Hamburg (DE)
(72) Erfinder: LENGSFELD, Hauke, 21717 Helmste (DE)
(74) Vertreter: Isarpatent
(86) Internationale Anmeldenummer: PCT/EP2009/052928
(87) Internationale Veröffentlichungsnummer: WO 2009/130087

(56) Entgegenhaltungen:
- DE-A1- 4 004 720
- US-A1- 2005 023 728
- US-B1- 6 432 236

## Beschreibung

Die vorliegende Erfindung bezieht sich auf eine Tapelegevorrichtung, insbesondere im Luft- und Raumfahrtbereich, sowie auf ein Verfahren zum Aufbau eines Laminats mittels einer Tapelegevorrichtung.

Zur Verarbeitung von Tapes werden heutzutage vielfach automatische Tapelegevorrichtungen eingesetzt, welche in der Lage sind, Tape großflächig abzulegen. Während des Ablegeprozesses wird abzulegendes Tape je nach Typ der eingesetzten Tapelegevorrichtung entweder über einen Gleitschuh oder eine Andruckrolle auf bereits abgelegtes Tape mit vergleichsweise geringem Druck gepresst, so dass das abzulegende Tape mit dem bereits abgelegten Tape geringfügig verklebt. Hierfür ist jedoch eine geeignete Klebrigkeit der Matrixsysteme in dem abzulegenden Tape beziehungsweise dem abgelegten Tape erforderlich. Diese Klebrigkeit kann durch moderates Erwärmen erhöht werden. Es ist daher im Betrieb der Anmelderin üblich geworden, einen warmen Luftstrom an dem abzulegenden Tape vorbeizuführen, welcher eine Erwärmung des abzulegenden Tapes im Wege der Konvektion bewirkt.

Es hat sich jedoch herausgestellt, dass die vorstehend beschriebene Erwärmung mittels des warmen Luftstroms nur sehr langsam von statten geht, da die Anregung zum Erwärmen des abzulegenden Tapes lediglich an der Oberfläche desselben erfolgt, und sich daher nicht die gewünschten Ablegegeschwindigkeiten erzielen lassen.

Die DE 40 04 720 A1 beschreibt eine Vorrichtung zum Herstellen von Verbundkörpern aus laminierten Kunststofffolienlagen.

Die US 2005/0023728 A1 beschreibt eine Vorrichtung bzw. ein Verfahren zur Herstellung von Versteifungselementen aus Kompositwerkstoffen.

Die US 6,432,236 B1 beschreibt ein Verfahren zur Herstellung von faserverstärkten Kompositbauteilen.

Es ist daher Aufgabe der vorliegenden Erfindung, eine verbesserte Tapelegevorrichtung beziehungsweise ein verbessertes Verfahren zum Aufbau eines Laminats mittels einer Tapelegevorrichtung bereitzustellen, welche beziehungsweise welches die vorstehend beschriebenen Nachteile vermeidet.

Erfindungsgemäß wird diese Aufgabe durch eine Tapelegevorrichtung mit den Merkmalen des Patentanspruchs 1 und/oder durch ein Verfahren mit den Merkmalen des Patentanspruchs 8 gelöst.

Demgemäß wird eine Tapelegevorrichtung, insbesondere im Luft- und Raumfahrtbereich, mit einer Ablegeeinrichtung und einer Anregungseinrichtung bereitgestellt. Die Ablegeeinrichtung ist für ein Ablegen von Tape zum Aufbau eines Laminats geeignet ausgebildet. Mittels der Anregungseinrichtung ist das abzulegende Tape für ein Erwärmen desselben über seine Dicke hinweg direkt und gleichmäßig anregbar.

Ferner wird ein Verfahren zum Aufbau eines Laminats mittels einer Tapelegevorrichtung, insbesondere im Luft- und Raumfahrtbereich, mit folgenden Schritten bereitgestellt: Zunächst wird ein abzulegendes Tape einer Ablegeeinrichtung zugeführt. Anschließend wird das abzulegende Tape mittels einer Anregungseinrichtung zum Erwärmen desselben über seine Dicke hinweg direkt und gleichmäßig angeregt. Hierauf wird das abzulegende Tape zum Aufbau des Laminats mittels der Ablegeeinrichtung abgelegt.

Die der vorliegenden Erfindung zugrunde liegende Idee besteht darin, dass anstelle der der Anmelderin bekannten Anregung an der Oberfläche des abzulegenden Tapes eine durchgehende Anregung des abzulegenden Tapes vorgenommen wird, d.h. eine Anregung, welche über die Dicke des abzulegenden Tapes hinweg auf dessen Bestandteile im Wesentlichen direkt und gleichmäßig wirkt. Die somit erzielte Erwärmung geht sehr viel schneller von statten als die an der Oberfläche gemäß dem bekannten Ansatz. Folglich kann die gewünschte Klebrigkeit des abzulegenden Tapes bei der gewünschten hohen Ablegegeschwindigkeit erzielt werden.

Aus den Unteransprüchen ergeben sich vorteilhafte Weiterbildungen und Verbesserungen der Erfindung.

Mit einem "Tape" ist vorliegend vorzugsweise jegliche Art von bahnförmigem Prepregmaterial, beispielsweise 300 mm breites Prepreg-Streifenmaterial, gemeint, welches für ein Ablegen mittels einer Tapelegevorrichtung geeignet ist. Mit "Prepegmaterial" sind vorliegend Rovings, Fasergelege und/oder Fasergewebe gemeint, welche mit einer Matrix, beispielsweise einer Duroplastmatrix oder Thermoplastmatrix, imprägniert, insbesondere vorimprägniert, sind. Bei den Fasern der Fasergelege beziehungsweise Fasergewebe handelt es sich insbesondere um Kohlenstofffasern. Vorzugsweise ist das Tape auf einem Trägermaterial angeordnet, insbesondere einem Trägerpapier. Während des Ablegens des Tapes zum Aufbau des Laminats löst sich dann vorzugsweise das Trägermaterial von dem Tape, wobei das Trägermaterial mittels einer geeigneten Einrichtung der Tapelegevorrichtung aufgewickelt wird.

Unter einer "Tapelegevorrichtung" ist vorliegend vorzugsweise auch eine Fibre-Placement-Vorrichtung zu verstehen.

Gemäß einer bevorzugten Weiterbildung der erfindungsgemäßen Tapelegevorrichtung weist die Ablegeeinrichtung eine Andruckrolle auf, mittels welcher das abzulegende Tape an abgelegtes Tape und/oder an eine Laminiervorrichtung andrückbar ist, wobei die Anregungseinrichtung in die Andruckrolle integriert ist. Die Anregungseinrichtung ist also innerhalb der Andruckrolle und/oder als Bestandteil dieser ausgebildet. Hierdurch ergibt sich ein sehr kompakter Aufbau. Alternativ, jedoch nicht von der vorliegenden Erfindung umfasst, könnte die Anregungseinrichtung auch in einen Andruckgleitschuh integriert sein. Die in die Andruckrolle integrierte Anregungseinrichtung könnte natürlich auch dazu verwendet werden, gleichzeitig mit dem abzulegenden Tape bereits abgelegtes Tape anzuregen und somit zu erwärmen. Dafür wäre eine vergleichsweise weit reichende als Induktionseinrichtung ausgebildete Anregungseinrichtung besonders geeignet, diese Ausführungsform ist jedoch nicht von der vorliegenden Erfindung umfasst.

Gemäß einer weiter bevorzugten Weiterbildung der erfindungsgemäßen Tapelegevorrichtung weist die Anregungseinrichtung mehrere Anregungseinheiten auf, welche entlang des Umfangs der Andruckrolle verteilt angeordnet sind und derart schaltbar sind, dass beim Drehen der Andruckrolle lediglich die Anregungseinheiten zum Anregen geschaltet sind, welche in dem Bereich des Umfangs der Andruckrolle, der dem abzulegenden Tape zugeordnet ist, angeordnet sind. Die Anregungseinrichtung kann somit sehr effizient betrieben werden, da nur die Anregungseinheiten zum Anregen des abzulegenden Tapes geschaltet werden, welche im Wesentlichen in unmittelbarer Nähe des abzulegenden Tapes angeordnet sind und somit erst in der Lage sind, das abzulegende Tape weitgehend verlustfrei anzuregen.

Gemäß einer weiter bevorzugten Weiterbildung der erfindungsgemäßen Tapelegevorrichtung weist die Ablegeeinrichtung eine Andruckrolle auf, mittels welcher das abzulegende Tape an abgelegtes Tape und/oder an eine Laminiervorrichtung andrückbar ist, wobei die Anregungseinrichtung mit der Andruckrolle einen Spalt bildet, durch welchen das abzulegende Tape für ein Anregen desselben führbar ist. Diese Anregungseinrichtung kann alternativ oder zusätzlich zu der in der Andruckrolle integrierten Anregungseinrichtung vorgesehen sein. Letztere Möglichkeit hätte den Vorteil, dass das abzulegende Tape von beiden Seiten her anregbar wäre. Aus der Anordnung der Anregungseinrichtung außerhalb der Andruckrolle ergibt sich der Vorteil, dass diese Anregungseinrichtung stationär bezüglich der Andruckrolle und bezüglich des abzulegenden Tapes vorgesehen werden kann und sich somit ein vergleichsweise einfacher Aufbau ergibt.

Gemäß einer weiter bevorzugten Weiterbildung der erfindungsgemäßen Tapelegevorrichtung ist eine weitere Anregungseinrichtung vorgesehen, mittels welcher abgelegtes Tape für ein Erwärmen desselben über seine Dicke hinweg direkt und gleichmäßig anregbar ist. Insbesondere ist hier eine Erwärmung einer obersten Lage von mehreren Lagen abgelegtem Tape gemeint. Um eine Verkleben des abzulegenden Tapes mit bereits abgelegtem Tape noch weiter zu verbessern, soll neben dem abzulegenden Tape auch das bereits abgelegte Tape angeregt und damit erwärmt werden. Somit weisen sowohl das abzulegende Tape als auch das bereits abgelegte Tape eine hohe Klebrigkeit auf. Wenn diese daraufhin beispielsweise mittels der Andruckrolle aneinander gedrückt werden, kommt es zu einem sehr guten Verkleben dieser.

Gemäß einer weiter bevorzugten Weiterbildung der Tapelegevorrichtung ist die weitere Anregungseinrichtung in Verfahrrichtung der Andruckrolle gesehen hinter dieser für ein Anregen des abgelegten Tapes angeordnet. Somit kann auf einfache Weise sichergestellt werden, dass das bereits abgelegte Tape angeregt und damit erwärmt wird, bevor es mit dem abzulegenden Tape in Kontakt kommt.

Gemäß einer weiter bevorzugten Weiterbildung der erfindungsgemäßen Tapelegevorrichtung ist die weitere Anregungseinrichtung in einen Gleitschuh oder eine Rolle integriert. Ein solcher Gleitschuh beziehungsweise eine solche Rolle kann einfach über das bereits abgelegte Tape geführt werden, was im Wesentlichen einen unmittelbaren Kontakt zwischen der weiteren Anregungseinrichtung und dem bereits abgelegten Tape ermöglicht, was wiederum einen sehr hohen Energieeintrag (Anregung) pro Zeit ermöglicht.

Gemäß einer weiter bevorzugten Weiterbildung kann die Anregungseinrichtung innerhalb der Andruckrolle angeordnet sein, sich jedoch mit dieser nicht mitdrehen. Dies ist insbesondere in dem Fall sinnvoll, dass die Anregungseinrichtung als Induktionseinrichtung ausgebildet ist. Die Induktionseinrichtung sollte auf den Abschnitt des Tapes gerichtet sein, welcher mit der Andruckrolle im Wesentlichen in Kontakt ist und/oder in Verfahrrichtung gesehen hinter der Rolle liegt, wobei diese Ausführungsform nicht von der vorliegenden Erfindung umfasst ist.

Gemäß einer weiter bevorzugten Weiterbildung der erfindungsgemäßen Tapelegevorrichtung erfolgt die Anregung des abzulegenden und/oder des abgelegten Tapes berührungslos. Damit kann eine Verschmutzung der Anregungseinrichtung beziehungsweise der weiteren Anregungseinrichtung durch die Matrix in dem Tape vermieden werden. Jedoch sollte nach Möglichkeit lediglich ein Minimalspalt zwischen dem abzulegendem Tape beziehungsweise dem abgelegten Tape und der Anregungseinrichtung und der weiteren Anregungseinrichtung vorgesehen sein, um den Energieeintrag pro Zeit zu maximieren.

Gemäß einer weiter bevorzugten Weiterbildung der erfindungsgemäßen Tapelegevorrichtung ist die Anregungseinrichtung und/oder die weitere Anregungseinrichtung als Ultraschalleinrichtung und/oder Induktionseinrichtung ausgebildet, wobei die Ausgestaltung als Induktionseinrichtung nicht von der vorliegenden Erfindung umfasst ist. Diese erlauben eine über seine Dicke hinweg direkte und gleichmäßige Anregung des Tapes. Auch spezielle Infrarotstrahler mit Tiefenwirkung kommen für eine derartige Anwendung in Frage sind jedoch nicht von der vorliegenden Erfindung umfasst.

Gemäß einer weiter bevorzugten Weiterbildung des erfindungsgemäßen Verfahrens wird das abzulegende Tape auf abgelegtem Tape oder einer Laminiervorrichtung abgelegt. Die sich hierbei ergebenden Vorteile wurden bereits vorstehend beschrieben.

Gemäß einer weiter bevorzugten Weiterbildung des erfindungsgemäßen Verfahrens wird vor dem Ablegen des abzulegenden Tapes das abgelegte Tape mit einer weiteren Anregungseinrichtung über seine Dicke hinweg direkt und gleichmäßig zum Erwärmen angeregt. Auch hierzu wurden die Vorteile bereits vorstehend beschrieben.

Gemäß einer weiter bevorzugten Weiterbildung des erfindungsgemäßen Verfahrens wird das abzulegende Tape und/oder abgelegte Tape mittels Ultraschall und/oder mittels eines sich verändernden Magnetfeldes angeregt. Diese Weiterbildung ist jedoch nicht von der vorliegenden Erfindung umfasst. Hierzu wurden ebenfalls die Vorteile bereits vorstehend aufgeführt.

Die Erfindung wird im Folgenden anhand von Ausführungsbeispielen unter Bezugnahme auf die beiliegenden Figuren der Zeichnung näher erläutert.

Von den Figuren zeigen:
- Fig. 1: in einer Seitenansicht eine Tapelegevorrichtung gemäß einem bevorzugten Ausführungsbeispiel der Erfindung;
- Fig. 2: eine schematische Ansicht A einer Andruckrolle der Tagelegevorrichtung aus Fig. 1:
- Fig. 3: schematisch einen Schnitt B-B aus Fig. 2; und
- Fig. 4: eine Seitenansicht einer Tapelegevorrichtung gemäß einem weiteren bevorzugten Ausführungsbeispiel der Erfindung.

In den Figuren sind gleiche oder funktionsgleiche Komponenten mit den gleichen Bezugszeichen bezeichnet, soweit nichts Gegenteiliges angegeben ist.

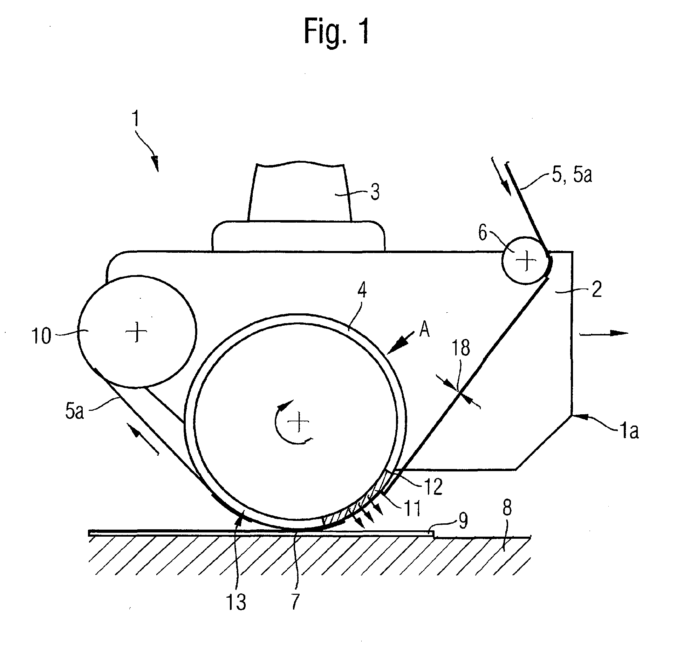

Fig. 1 zeigt in einer Seitenansicht eine Tapelegevorrichtung 1 gemäß einem bevorzugten Ausführungsbeispiel der vorliegenden Erfindung.

Die Tapelegevorrichtung 1 weist eine Ablegeeinrichtung 1a mit einem Gestell 2 auf, welches beispielsweise an einem Flansch 3 eines nicht dargestellten Portalroboters befestigt ist. Der Portalroboter verfährt die Tapelegevorrichtung 1 in die mit Pfeil 3a angedeutete Verfahrrichtung.

An dem Gestell 2 ist eine Andruckrolle 4 der Ablegeeinrichtung 1a drehbar gelagert vorgesehen, welcher Tape 5 auf einem Trägerpapier 5a von einer nicht dargestellten Spule über eine Umlenkrolle 6, die ebenfalls an dem Gestell 2 drehbar gelagert vorgesehen ist, vorderseitig zugeführt wird.

Das Tape 5 mit dem Trägerpapier 5a umschlingt die Andrückrolle 4 abschnittsweise, wobei das Trägepapier 5a zwischen dem Tape 5 und der Andruckrolle 4 angeordnet ist. Das Tape 5 wird in einem Bereich 7 mittels der Andrückrolle 4 auf ein Laminat 9, welches bereits auf einer Laminiervorrichtung 8 aufgebaut ist, gedrückt. Dadurch verklebt das Tape 5 mit dem Laminat 9 und löst sich von dem Trägerpapier 5a mittels des Verfahrens der Tapelegevorrichtung 1 in der Verfahrrichtung 3a.

Das Laminat 9 setzt sich aus einer oder mehreren Lagen des Tapes 5 zusammen. Diese Lagen wurden mittels der Laminiervorrichtung 1 in Schritten aufgebaut, welche dem in Fig. 1 dargestellten Verfahrenszustand vorausgehen.

Das Trägerpapier 5a wird rückseitig der Andruckrolle 4 auf einer Rolle 10 aufgewickelt.

Die Drehrichtung der Andruckrolle 4 sowie die Förderrichtung des Tapes 5 beziehungsweise des Trägerpapiers 5a ist in Fig. 1 jeweils mit Pfeilen beispielhaft angedeutet.

Um nun ein besseres Verkleben des Tapes 5 mit dem Laminat 9 zu gewährleisten, ist vorgesehen, das Laminat 5 wenigstens in einem Bereich 11 zum Erwärmen desselben anzuregen. Der Bereich 11 erstreckt sich vorzugsweise von dem Bereich 7 entlang des Umfangs der Andruckrolle 4 hin zu einem Bereich 12, in welchem das Tape 5 mit der Andruckrolle 4 erstmalig in Kontakt kommt. Das Anregen des Tapes 5 in dem Bereich 11 wird gemäß dem Ausführungsbeispiel aus Fig. 1 mittels einer Anregungseinrichtung 13 der Tapelegevorrichtung 1 bewerkstelligt, die in Fig. 1 lediglich schematisch angedeutet ist.

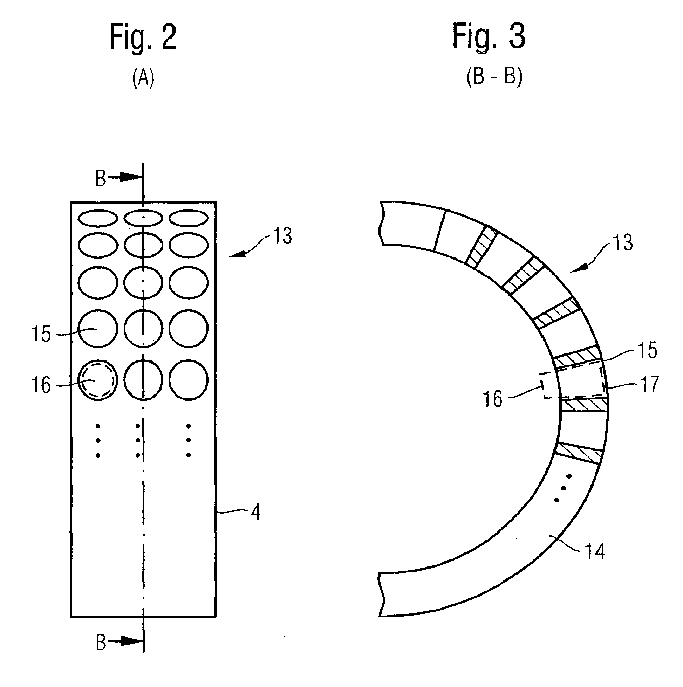

Fig. 2 zeigt schematisch in einer Ansicht A die Andruckrolle aus Fig. 1. Fig. 3 zeigt eine Schnittansicht B-B aus Fig. 2.

Wie in Fig. 2 dargestellt, weist die Andruckrolle 4 in ihrer im Wesentlichen ringförmigen Wand 14 eine Vielzahl von sich radial erstreckenden Ausnehmungen (beispielhaft mit dem Bezugszeichen 15 bezeichnet). In jeder dieser Ausnehmungen 15 ist eine Anregungseinheit 16, beispielsweise eine Sonotrode, angeordnet. In den Figuren 2 und 3 ist lediglich beispielhaft eine Sonotrode 16 gezeigt.

Die Sonotroden 16 kommen mit ihrem Anregungskopf 17 in dem Bereich 11, siehe Fig. 1, in Kontakt mit dem Trägerpapier 5A oder bilden einen Minimalspalt mit diesem. Die Sonotroden 16 werden mit einer nicht dargestellten Steuereinrichtung derart gesteuert, dass lediglich die Sonotroden 16, welche augenblicklich in dem Bereich 11, siehe Fig. 1, angeordnet sind, zum Anregen des Tapes 5 geschalten werden. Der von den Sonotroden 16 erzeugte Ultraschall, welcher beispielsweise in einem Frequenzbereich zwischen 20 kHz und 5 MHz liegt, bewirkt eine Erwärmung des Tapes 5. Diese Erwärmung erfolgt über die gesamte in Fig. 1 mit dem Bezugszeichen 18 gekennzeichnete Dicke des Tapes 5 innerhalb kürzester Zeit. Damit erhöht sich die Klebrigkeit des Tapes 5 deutlich, woraufhin dieses gut mit dem Laminat 9 in dem Bereich 7, siehe Fig. 1, verklebt.

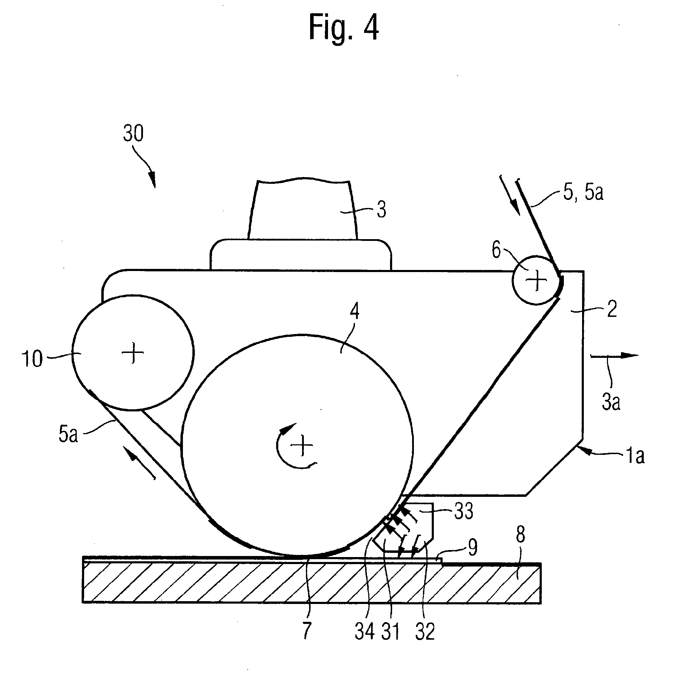

Fig. 4 zeigt in einer schematischen Seitenansicht eine Tapelegevorrichtung 30 gemäß einem weiter bevorzugten Ausführungsbeispiel, welche nicht von der vorliegenden Erfindung umfasst ist. Im Folgenden wird lediglich auf die Unterschiede der Tapelegevorrichtung 30 gemäß Fig. 4 gegenüber der Tapelegevorrichtung 1 aus Fig. 1 eingegangen.

Bei der Tapelegevorrichtung 30 ist eine erste Anregungseinrichtung 31 und eine zweite Anregungseinrichtung 32 vorgesehen, wobei eine derartige Ausgestaltung der Tapelegevorrichtung 30 nicht von der vorliegenden Erfindung umfasst ist.

Die erste Anregungseinrichtung 31 entspricht in ihrer Funktion der Anregungseinrichtung 13, ist aber innerhalb eines Gleitschuhs 33 außerhalb der Andruckrolle 4 und in Verfahrrichtung 3a gesehen hinter dieser angeordnet. Der Gleitschuh 33 bildet mit der Andruckrolle 4 einen Spalt 34, durch welchen das Tape 5 samt Trägerpapier 5A geführt wird.

In den Gleitschuh 33 ist vorzugsweise weiterhin die zweite Anregungseinrichtung 32 integriert. Die zweite Anregungseinrichtung 32 regt im Wesentlichen eine oberste Tapelage des bereits abgelegte Laminat 9 über seine Dicke hinweg direkt und gleichmäßig zum Erwärmen desselben an. Somit kann auch eine Erhöhung der Klebrigkeit des bereits abgelegten Laminats 9 erhöht werden, wodurch ein Verkleben des abzulegenden Tapes 5 in dem Bereich 7 mit dem Laminat 9 noch weiter verbessert werden kann.

In den Figuren 1 und 4 ist die Richtung der Anregung der jeweiligen Anregungseinrichtungen 13 beziehungsweise 31 und 32 mit mehreren Pfeilen angedeutet.

Die erste und zweite Anregungseinrichtung 31, 32 können beispielsweise als Induktionseinrichtungen ausgebildet sein, welche ein sich veränderndes Magnetfeld erzeugen, was wiederum zu einem Stromfluss innerhalb der Fasern, insbesondere Kohlenstofffasern, in dem Tape führt. Der in den Fasern inhärente elektrische Widerstand führt wiederum dazu, dass es zu einer Erwärmung des Tapes 5 beziehungsweise des Laminats 9 kommt.

Selbstverständlich sind die Ausführungsbeispiele gemäß den Figuren 1 und 4 miteinander kombinierbar.

Auch könnten die Anregungseinheiten 16 bei dem Ausführungsbeispiel gemäß Fig. 1 als Induktionseinheiten ausgebildet sein, wobei ein derartiges Ausführungsbeispiel nicht von der vorliegenden Erfindung umfasst ist.

Obwohl die vorliegende Erfindung anhand von bevorzugten Ausführungsbeispielen beschrieben wurde, ist sie auf diese nicht beschränkt, sondern auf vielfältige Art und Weise modifizierbar.

Ergänzend sei darauf hingewiesen, dass "ein" keine Vielzahl ausschließt. Ferner sei darauf hingewiesen, dass Merkmale oder Schritte, welche in Bezug auf ein Ausführungsbeispiel beschrieben worden sind, auch in Kombination mit anderen Merkmalen oder Schritten anderer Ausführungsbeispiele beziehungsweise Weiterbildungen verwendet werden können.

Die vorliegende Erfindung schafft eine Tapelegevorrichtung sowie ein Verfahren zum Aufbau eines Laminats mittels einer Tapelegevorrichtung, insbesondere im Luft- und Raumfahrtbereich. Die Tapelegevorrichtung weist eine Ablegeeinrichtung für ein Ablegen von Tape zum Aufbau eines Laminats und eine Anregungseinrichtung, mittels welcher das abzulegende Tape für ein Erwärmen desselben über seine Dicke hinweg direkt und gleichmäßig anregbar ist, auf. Die der vorliegenden Erfindung zugrunde liegende Idee besteht darin, dass anstelle der der Anmelderin bekannten Anregung an der Oberfläche des abzulegenden Tapes eine über seine Dicke hinweg direkte und gleichmäßige Anregung des abzulegenden Tapes vorgenommen wird, d.h. eine Anregung, welche über die Dicke des abzulegenden Tapes hinweg auf dessen Bestandteile im Wesentlichen direkt und gleichmäßig wirkt. Die somit erzielte. Erwärmung geht sehr viel schneller von statten als die mittels Konvektion gemäß dem bekannten Ansatz. Folglich kann die gewünschte Klebrigkeit des abzulegenden Tapes bei der gewünschten hohen Ablegegeschwindigkeit erzielt werden.

## Patentansprüche

1. Tapelegevorrichtung (1; 30), insbesondere im Luft- und Raumfahrtbereich, mit:
einer Ablegeeinrichtung (1a) für ein Ablegen von Tape (5) zum Aufbau eines Laminats (9), wobei die Ablegeeinrichtung (1a) eine Andruckrolle (4) aufweist, mittels welcher das abzulegende Tape (5) an abgelegtes Tape (9) andrückbar ist,; und
einer als Ultraschalleinrichtung ausgebildeten Anregungseinrichtung (13; 31), mittels welcher das abzulegende Tape (5) für ein Erwärmen desselben über seine Dicke (18) hinweg direkt und gleichmäßig anregbar ist, wobei die Anregungseinrichtung (13) in die Andruckrolle (4) integriert ist, und wobei die Anregungseinrichtung (13) mehrere Anregungseinheiten (16) aufweist, welche entlang des Umfangs der Andruckrolle (4) verteilt angeordnet sind.

2. Tapelegevorrichtung nach Anspruch 1,
**dadurch gekennzeichnet,**
**dass** die mehreren Anregungseinheiten (16) derart schaltbar sind, dass bei drehender Andruckrolle (4) lediglich die Anregungseinheiten (16) zum Anregen geschalten sind, die in dem Bereich (11) des Umfangs der Andruckrolle (4), der dem abzulegenden Tape (5) zugeordnet ist, angeordnet sind.

3. Tapelegevorrichtung nach Anspruch 1,
**dadurch gekennzeichnet,**
**dass** die Ablegeeinrichtung (1a) eine Andruckrolle (4) aufweist, mittels welcher das abzulegende Tape (5) an abgelegtes Tape (9) andrückbar ist, wobei die Anregungseinrichtung (31) mit der Andruckrolle (4) einen Spalt (34) bildet, durch welchen das abzulegende Tape (5) für ein Anregen desselben führbar ist.

4. Tapelegevorrichtung nach wenigstens einem der vorhergehenden Ansprüche,
**dadurch gekennzeichnet,**
**dass** eine weitere Anregungseinrichtung (32) vorgesehen ist, mittels welcher abgelegtes Tape (9) für ein Erwärmen desselben über seine Dicke hinweg direkt und gleichmäßig anregbar ist.

5. Tapelegevorrichtung nach Anspruch 4,
**dadurch gekennzeichnet,**
**dass** die weitere Anregungseinrichtung (32) in Verfahrrichtung (3a) der Andruckrolle (4) gesehen hinter dieser für ein Anregen des abgelegten Tapes (9) angeordnet ist.

6. Tapelegevorrichtung nach Anspruch 4 oder 5,
**dadurch gekennzeichnet,**
**dass** die weitere Anregungseinrichtung (32) in einen Gleitschuh (33) oder eine Rolle integriert ist.

7. Tapelegevorrichtung nach wenigstens einem der vorhergehenden Ansprüche,
**dadurch gekennzeichnet,**
**dass** die Anregung des abzulegenden Tapes (5) und/oder des abgelegten Tapes (9) berührungslos erfolgt.

8. Verfahren zum Aufbau eines Laminats (9) mittels einer Tapelegevorrichtung (1; 30), insbesondere im Luft- und Raumfahrtbereich, mit folgenden Schritten:
Zuführen von abzulegendem Tape (5) an eine Ablegeeinrichtung (1a), wobei die Ablegeeinrichtung (1a) eine Andruckrolle (4) aufweist;
Direktes und gleichmäßiges Anregen des abzulegenden Tapes (5) über seine Dicke (18) hinweg mittels einer als Ultraschalleinrichtung ausgebildeten Anregungseinrichtung (13; 31) zum Erwärmen desselben, wobei die Anregungseinrichtung (13) in die Andruckrolle (4) integriert ist, und wobei die Anregungseinrichtung (13) mehrere Anregungseinheiten (16) aufweist, welche entlang des Umfangs der Andruckrolle (4) verteilt angeordnet sind; und
Ablegen des abzulegenden Tapes (5) zum Aufbau des Laminats (9) mittels der Ablegeeinrichtung (1a).

9. Verfahren nach Anspruch 8,
**dadurch gekennzeichnet,**
**dass** das abzulegende Tape (5) auf abgelegtem Tape (9) abgelegt wird, wobei vor dem Ablegen des abzulegenden Tapes (5) das abgelegte Tape (9) mittels einer weiteren Anregungseinrichtung (32) über seine Dicke (18) hinweg direkt und gleichmäßig zum Erwärmen angeregt wird.

## Claims

1. Tape installation device (1; 30), in particular in the field of aeronautics, having:
- a installation arrangement (1a) for installing tape (5) for the construction of a laminate (9), wherein the installation arrangement (1a) comprises a pressure roller (4), by means of which the tape (5) to be installed can be pressed onto installed tape (9); and
- a stimulation arrangement (13; 31) which is formed as an ultrasound arrangement and by means of which the tape (5) to be installed can be stimulated directly and evenly over the thickness (18) thereof for heating same, wherein the stimulation arrangement (13) is integrated into the pressure roller (4) and wherein the stimulation arrangement (13) comprises a plurality of stimulation units (16), which are arranged distributed along the circumference of the pressure roller (4).

2. Tape installation device as claimed in claim 1, **characterised in that** the plurality of stimulation units (16) can be switched in such a way that, as the pressure roller (4) rotates, only the stimulation units (16) which are arranged in the region (11) of the circumference of the pressure roller (4) associated with the tape (5) to be installed are switched for stimulation purposes.

3. Tape installation device as claimed in claim 1, **characterised in that** the installation arrangement (1a) comprises a pressure roller (4) by means of which the tape (5) to be installed can be pressed onto installed tape (9), the stimulation arrangement (31) and the pressure roller (4) forming a gap (4) through which the tape (5) to be installed can be guided for stimulation thereof.

4. Tape installation device as claimed in at least one of the preceding claims, **characterised in that** a further stimulation arrangement (32) is provided by means of which installed tape (9) can be stimulated directly and evenly over the thickness thereof for heating same.

5. Tape installation device as claimed in claim 4, **characterised in that** the further stimulation arrangement (32) is arranged downstream of the pressure roller (4), as seen in the displacement direction (3a) thereof, to stimulate the installed tape (9).

6. Tape installation device as claimed in either claim 4 or 5, **characterised in that** the further stimulation arrangement (32) is integrated into a sliding block (33) or a roller.

7. Tape installation device as claimed in at least one of the preceding claims, **characterised in that** the tape (5) to be installed and/or the installed tape (9) is stimulated in a contactless manner.

8. Method for the construction of a laminate (9) using a tape installation device (1; 30), in particular in the field of aeronautics, having the following steps:
- supplying tape (5) to be installed to an installation arrangement (1a), wherein the installation arrangement (1a) comprises a pressure roller (4);
- directly and evenly stimulating the tape (5) to be installed over the thickness (18) thereof using a stimulation arrangement (13; 31), formed as an ultrasound arrangement, for heating said tape, wherein the stimulation arrangement (13) is integrated into the pressure roller (4), and wherein the stimulation arrangement (13) comprises a plurality of stimulation units (16) arranged distributed along the circumference of the pressure roller (4); and
- installing the tape (5) to be installed to construct the laminate (9) using the installation arrangement (1a).

9. Method as claimed in claim 8, **characterised in that** the tape (5) to be installed is installed on installed tape (9), the installed tape (9) being stimulated directly and evenly over the thickness (18) thereof for heating same, by means of a further stimulation arrangement (32) before installing the tape (5) to be installed.

## Revendications

1. Dispositif de pose de bande (1 ; 30), en particulier dans le domaine de l'aéronautique et de l'aérospatiale, comportant :
- un système de dépose (1a) pour déposer la bande (5) destinée à la construction d'un stratifié (9), le système de dépose (1a) présentant un rouleau de compression (4) au moyen duquel la bande à déposer (5) peut être comprimée sur la bande déposée (9) ; et
- un système d'excitation (13 ; 31) réalisé sous la forme d'un système à ultrasons, au moyen duquel 1a bande à déposer (5) peut être excitée directement et uniformément sur toute son épaisseur (18) pour réchauffer celle-ci, le système d'excitation (13) étant intégré dans le rouleau de compression (4), et le système d'excitation (13) présentant plusieurs unités d'excitation (16) réparties sur la périphérie du rouleau de compression (4).

2. Dispositif de pose de bande selon la revendication 1, **caractérisé en ce que** les différentes unités d'excitation (16) sont commutables de telle sorte que, lorsque le rouleau de compression (4) tourne, seules les unités d'excitation (16) disposées dans la zone (11) de la périphérie du rouleau de compression (4) qui est associée à la bande à déposer (5) sont commutées pour être excitées.

3. Dispositif de pose de bande selon la revendication 1, **caractérisé en ce que** le système de dépose (1a) présente un rouleau de compression (4) au moyen duquel la bande à déposer (5) peut être comprimée sur la bande déposée (9), le système d'excitation (31) formant avec le rouleau de compression (4) une fente (34) à travers laquelle la bande à déposer (5) peut être guidée pour être excitée.

4. Dispositif de pose de bande selon au moins une des revendications précédentes, **caractérisé en ce qu'**un autre système d'excitation (32) est prévu, au moyen duquel la bande déposée (9) peut être excitée directement uniformément sur toute son épaisseur pour réchauffer celle-ci.

5. Dispositif de pose de bande selon la revendication 4, **caractérisé en ce que** l'autre système d'excitation (32) est disposé, vu dans la direction de procédé (3a) du rouleau de compression (4), derrière celui-ci pour une excitation de la bande déposée (9).

6. Dispositif de pose de bande selon la revendication 4 ou 5, **caractérisé en ce que** l'autre système d'excitation (32) est intégré dans un patin (33) ou un rouleau.

7. Dispositif de pose de bande selon au moins une des revendications précédentes, **caractérisé en ce que** l'excitation de la bande à déposer (5) et/ou de la bande déposée (9) se fait sans contact.

8. Procédé de construction d'un stratifié (9) au moyen d'un dispositif de pose de bande (1 ; 30), en particulier dans le domaine de l'aéronautique et de l'aérospatiale, comprenant les étapes suivantes consistant à :
- alimenter la bande à déposer (5) sur un système de dépose (1a), le système de dépose (1a) présentant un rouleau de compression (4) ;
- exciter directement et uniformément la bande à déposer (5) sur toute son épaisseur (18) au moyen d'un système d'excitation (13 ; 31) réalisé sous la forme d'un système à ultrasons afin de réchauffer celle-ci, le système d'excitation (13) étant intégré dans le rouleau de compression (4) et le système d'excitation (13) présentant plusieurs unités d'excitation (16) réparties sur la périphérie du rouleau de compression (4) ; et
- déposer la bande à déposer (5) au moyen du système de dépose (1a) pour construire le stratifié (9).

9. Procédé selon la revendication 8, **caractérisé en ce que** la bande à déposer (5) est déposée sur la bande déposée (9) et, avant la dépose de la bande à déposer (5), la bande déposée (9) est excitée directement et uniformément au moyen d'un autre système d'excitation (32) sur toute son épaisseur (18) afin de réchauffer celle-ci.
